# EUROPEAN PATENT SPECIFICATION

(11) **EP 0 373 290 B1**
(45) Date of publication and mention of the grant of the patent: **29.09.1993**
(21) Application number: 89112611.2
(22) Date of filing: 10.07.1989
(51) Int. Cl.: C03B 23/025

(54) **A method of heat deforming sheet glass for interior architecture applications**
Verfahren zum Verformen von heissen Glasplatten für Innenarchitekturanwendungen
Procédé pour déformer à chaud une feuille de verre pour des applications architecturales intérieures

(30) Priority: 14.12.1988 IT 2294588
(43) Date of publication of application: 20.06.1990
(73) Proprietor: FIAM s.r.l., I-61010 Tavullia (Pesaro) (IT)
(72) Inventor: Livi, Vittorio, I-61100 Pesaro (IT)
(74) Representative: De Nova, Roberto

(56) References cited:
- DE-B- 1 271 917
- GB-A- 684 543
- US-A- 2 663 974
- US-A- 4 302 417

## Description

This invention relates to a method for heat deforming originally flat sheet glass, for interior architecture applications, according to the pre-characterizing part of Claim 1 and to a fixture for carrying out this method according to the pre-characterizing part of Claim 2 (see GB-A-684 543).

A method of this kind is currently implemented through fixtures which are introduced into a furnace, with a sheet to be deformed laid on a former. Because of the heating, the sheet becomes pliant and collapses by gravity downwards onto the former, to acquire the former shape, which is enhanced by the compression of the sheet.

Such fixtures perform quite satisfactorily where sheet glass is to be deformed into simple profile shapes. In fact, they allow a limited number of basic profile shapes to be obtained, such as inverted "V" or "U" shapes, or a trapezoidal profile shape having a straight middle section and sloping-down eaves at the ends.

More complex profile shapes cannot be obtained because the sheet cannot be made to lie down evenly all over the former. On the other hand, it is impossible to extend the residence time of the fixture within the furnace, or to raise the furnace temperature, because the sheet glass would then undergo a surface alteration referred to, in glasswork parlance, as "burn-outs", that is a form of damage which shows up as a darkening and loss of shine.

To obtain complex profile shapes, it is current practice to subject the sheet glass to two or more passes over different fixtures having different formers, the sheet being optionally overturned in moving from one fixture to the next.

The coming and going of fixtures from and to the furnace and continued labor attendance result in much wasted time and increased cost of the end product.

The object of this invention is to provide a method having such features as to overcome the above-noted shortcoming.

This problem is solved by a method as indicated in Claim 1 and by a fixture as indicated in Claim 2.

Further features and the advantages of the method according to this invention will be apparent from the following detailed description of a fixture for implementing it, given by way of non-limitative illustration with reference to the accompanying drawings, where:
Figure 1 is a perspective view of a glass sheet to be deformed;
Figure 2 is a side elevation view of a fixture for implementing the inventive method; and
Figure 3 is a perspective view of the glass sheet shown in Figure 1 after it has been subjected to deformation.

Generally indicated at 1 is a fixture according to the invention and intended for introduction into a furnace for heat deforming a glass sheet 2.

The sheet 2 to be deformed has a rectangular outline with opposite short sides 3 and 4. Five slits are cut through it lengthwise which lie parallel to the long sides of the sheet. These slits define six strips extending between two end portions 5 and 6. The odd-numbered strips constitute a sheet portion 7 to be deformed in the downward direction, whereas the even-numbered ones constitute a sheet portion 8 to be deformed in the upward direction.

The fixture 1 comprises an elongate gantry 9, which extends lengthwise between opposite ends 10 and 11, and has a rectangular base 12 and two identical side frames 13.

Arranged at either opposite ends 10 and 11 are respective shelves 14 and 15 extending in a transverse direction at a predetermined distance above the base 12. Such shelves 14 and 15 are affixed to the tops of respective vertical pillar pairs 16, 17 secured on the base 12. The sheet 2 is arranged to rest on the shelves 14 and 15 with its portions 5 and 6 such that its edges 3 and 4 will jut out of the shelves 14, 15 cantilever-fashion.

A fixed former or mold 18 is mounted to the gantry 9 and split into strips to suit a desired ultimate configuration for the sheet portion 7. This configuration has, in the example shown, a cosinusoidal profile shape 19 radiused to the shelves 14 and 15.

The fixture 1 comprises a movable former or mold 20 which is split into strips to suit the configuration ultimately sought for the sheet portion 8. This configuration has, in the example shown, a profile shape 21 which is a mirror-image of the profile shape 19 about a horizontal plane. The movable former 20 can be shifted in a vertical direction within the gantry 9. It is made fast with supporting slats 22 and 23 which are provided with guiding bush pairs 24 and 25 mating with the pillars 16 and 17 in a guided fashion. The slats 22 and 23 are movable vertically between a position of rest on the base 12 and a position of abutment against the undersides of the shelves 14 and 15.

The fixture 1 includes two pushers 26 and 27 acting on the edges 3 and 4 of the sheet 2 to load them in compression horizontally.

The pushers 26 and 27 are made unitary, through respective rigid arm pairs 28 and 29, with respective pairs of rigid longitudinal rods 30 and 31 having square cross-sectional shapes and being supported, in a guided fashion, on the side frames 13 of the gantry.

In this example, the rods 30 and 31 are arranged at a distance apart on each side frame 13, with the rod 30 located below the rod 31.

To support the rods 30 and 31 in a guided manner, each side frame 13 is provided with grooved idle rollers 32 defining, in pairs, a passageway of square cross-sectional shape matching the cross-sectional shape of the rod.

A drive 33 is provided to interconnect the pushers 26 and 27 such that their movements relatively to the gantry 9 are an equal distance but opposite directions.

The drive 33 comprises, on each side frame 13, a pinion gear 34 journalled for idle rotation on the end 10 of the gantry, at a location between the rod 30 and the rod 31. The pinion gear 34 meshes concurrently, at diametrically opposed points thereof, with a rack 35 formed along the rod 30 integrally therewith and a rack 36 also integrally formed along the rod 31. The pinion gears 34 of the two side frames are keyed to a single shaft 37.

Thrust rollers 38 and 39, mounted for idle rotation on the end 10, engage with the rods 30 and 31 to ensure proper meshing of the rods with the pinion gear.

Moreover, a drive 40, quite similar to the drive 33 and co-functional therewith, is also provided at the other end 11 of the gantry 9.

To have the pushers 26 and 27 urged toward each other, the fixture 1 includes a first driver arrangement 41 comprising a mass 42 acting by its own weight on the rods 30 and 31 via a rope 43 and a leverage 44.

More specifically, each lever in a lever pair 45 -- one for each side frame -- has a bottom end 45a pivoted on the base 12, on the side of the end 10. At their top ends 45b, the levers 45 of the pair are interconnected by a cross beam 46 having an eye 47 located halfway along its length.

Each lever in another lever pair 48 -- one for each side frame -- has a bottom end 48a pivoted on the base 12, on the side of the end 11. At their top ends 48b, the levers 46 of the pair are interconnected by a cross beam 49 having an eye 50 halfway along its length.

A slot 51 formed in each lever 45 is engaged, at an elevation level with the rod 31, by a pin 52 made unitary with the rod 30 by a right-angle cheek plate 53. A slot 54 formed in each lever 48 is engaged by a pin 55 made directly unitary with the rod 31, thereby the pins 52 and 55 locate at the same level.

The rope 43 has a first end tied through the eye 50, is passed through the eye 47, led back toward the eye 50 as far as a sheave 56 associated with the gantry 2, and hence down to bear the mass 42 by its other end.

The mass 42 permanently urges the levers 45 and 48 to pivot in clockwise and counterclockwise directions, respectively, as indicated by the arrows F1 and F2, and accordingly, will drive the rods 30 and 31, along with the pushers 26 and 27, toward each other.

To provide for the vertically upward movement of the movable former 20, the fixture 1 includes a second driver arrangement 57 which comprises a rope system 58 led to the aforesaid mass 42.

More specifically, the rope system 58 comprises a rope pair 59 and rope pair 60. Each rope 59 has one end attached to a respective lever 45 and the other end attached to the slat 22, it being trained over a pulley 61 journalled to the top of an upright 62 secured on the gantry 9. Said pulley 61 re-directs the rope 59 in a right-angle direction.

Likewise, each rope 60 has one end attached to a respective lever 48 and the other end attached to the slat 23, it being trained over a pulley 63 journalled to the top of an upright 64 secured on the gantry 9. Said pulley 63 re-directs the rope 60 at right angles.

The mass 42, by constantly biasing the levers 45 and 48 to pivot in clockwise and counterclockwise directions, respectively -- as previously mentioned -- will constantly urge in the upward direction the slats 22 and 23, and therefore the movable former 20, through the ropes 59 and 60.

Removal of the mass 42 will let the movable former 20 come down by its own weight. This descent causes, via the ropes 59 and 60, a pivotal movement of the levers 45 and 48 in the opposite direction from the previous direction, and accordingly, a movement of the pushers 26 and 27 away from each other.

Affixed to the gantry 9 are rigid vertical sheet plates, collectively designated 65, which form side members for each strip of the fixed former 18 effective to keep the portion 7 guided.

Likewise, there are attached to the movable former 20, at each strip thereof, rigid vertical sheet plates, collectively designated 66, which constitute side members effective to keep the portion 8 guided.

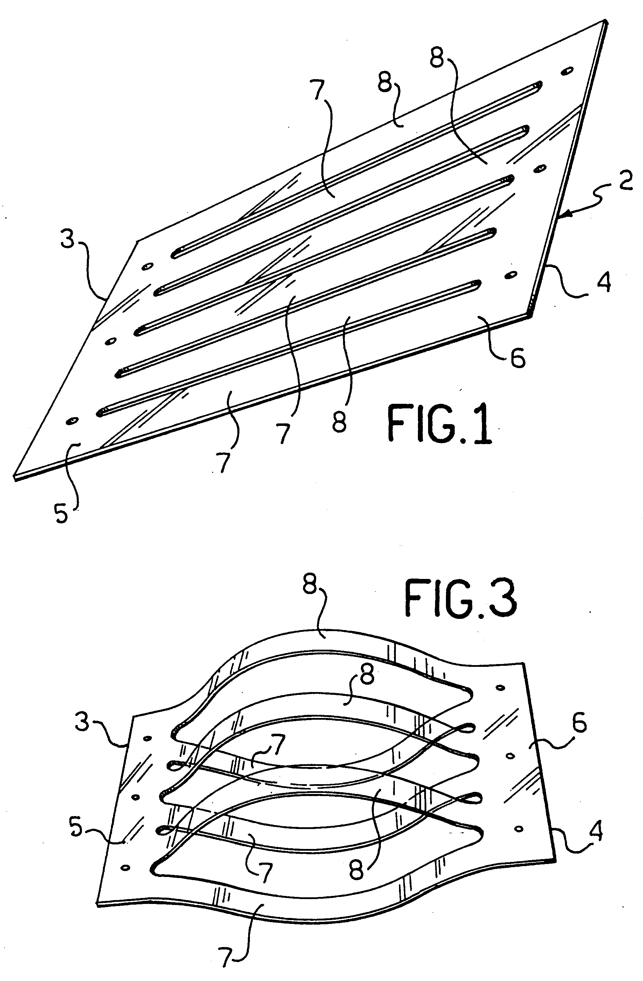

With the method provided by this invention, to heat deform the glass sheet 2 (see Figure 1), the fixture 1 is arranged, as relieved of the mass 42, such that the pushers 26 and 27 locate at positions of maximum distance apart, and thereafter, the glass sheet 2 is laid down onto the shelves 14 and 15. The mass 42 is then hung from the rope 43. In this way, it will cause, by its own weight via the rope 43, the levers 45 and 48 to pivot in the directions of the arrows F1 and F2, thereby the pushers 26 and 27 are driven toward each other in pressure contact with the edges 3 and 4 of the glass sheet, and the movable former is caused, via the ropes 59 and 60, to approach the sheet 2 from below.

The fixture, so set up, is then introduced into the furnace.

The glass sheet is therefore subjected to a compressive force by the pushers engaged with its edges. At the same time, the movable former will push the glass sheet upwards.

Due to the temperature, the glass sheet loses its rigidity.

Its portion 7 will deform downwards by its own weight and come to rest on the fixed former 18, it being assisted here by the compressive force concurrently applied by the pushers. Its portion 8, under the thrust applied by the movable former, will instead deform upwards against gravity. This deformation of the portion 8 is also assisted by the concurrent compression exerted by the pushers.

The compressive action developed by the pushers will thus promote both the downward deformation of the portion 7 and the upward deformation of the portion 8.

The portion 7 is kept guided in its downward deformation by the side sheet plates 65, to prevent any undesired sideways movements thereof. In a similar manner, and for the same effect, during the upward deformation, the portion 8 is held guided by the side sheet plates 66.

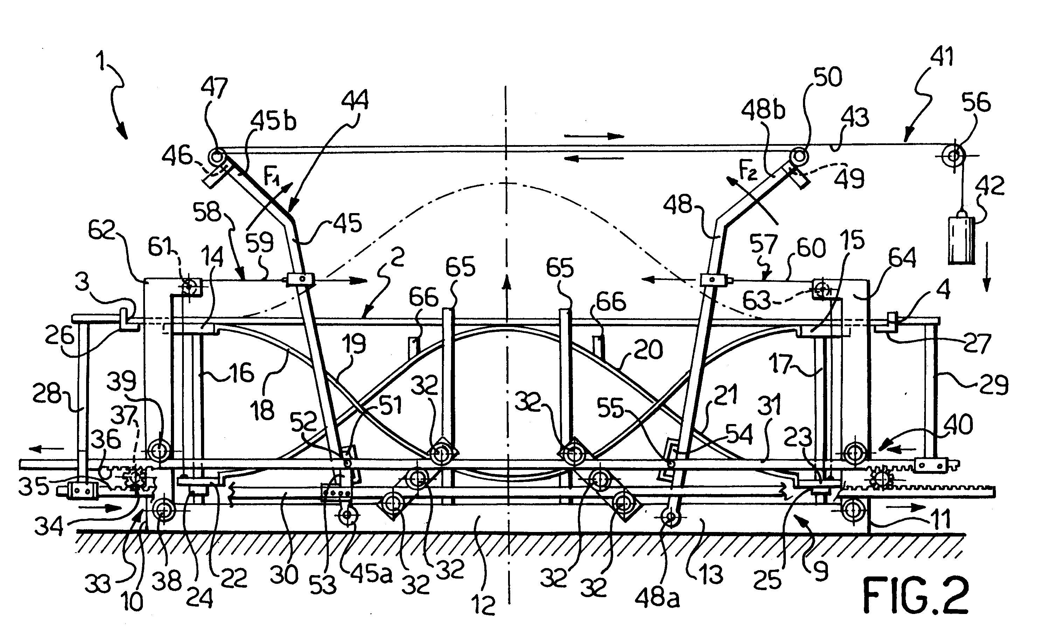

On the slats 22 and 23 abutting against the shelves 14 and 15, the upward stroke of the movable former is stopped. Under this condition, the glass sheet has its portion 7 molded to the desired cosinusoidal profile shape 19, and its portion 8 to a mirror-image profile shape 21 (see Figure 2).

After withdrawal from the furnace, the fixture is restored to its original set up condition to allow the now deformed glass sheet to be removed, and to go through the same cycle over again with a fresh sheet to be deformed.

A major advantage of the method and the fixture according to the invention is that they enable profile shapes of unusually complex design to be obtained in a fast and almost fully automated manner.

A further advantage of the inventive method and fixture resides in the high quality of the sheet glass processed thereby, which retains its original shine unaltered.

A not least advantage is, for a method and a fixture which are to yield glass sheets bent into exactly alike items of furniture such as chairs, easy chairs, and the like, that they afford exact repeatability of a shape obtained thereby.

## Claims

1. A method for beat deforming originally flat sheet glass (2) on a former (18) placed underneath the sheet glass (2) to receive sheet portions (7) undergoing vertically downward deformation by gravity, comprising a step wherein the sheet (2) is subjected to compression by pushers (26, 27) acting horixontally on opposite edges (3, 4) of the sheet (2), characterized in that it comprises a concurrent step wherein other sheet portions (8) are subjected to a thrust force acting upwards from below by a movable former (20) to deform them upwards against gravity.

2. A fixture (1) for heat deforming sheet glass (2), being of a type which comprises, within a gantry (9), a former (18) adapted to receive sheet portions (7) being deformed downwards, and two pushers (26, 27) arranged to act on opposite edges (3,4) of the sheet (2) and being movable horizontally toward each other by first driver arrangements (41) to subject the sheet to compression, characterized in that it comprises at least one movable former (20) adapted to be moved vertically by the action of second driver arrangements (57) to engage portions (8) of the sheet (2) and deform them upwards.

3. A fixture (1) according to Claim 2, characterized in that it comprises a drive (33) between said pushers (26, 27) interconnecting them such that their movements relatively to the gantry (9) can be made equal but opposite in direction.

4. A fixture (1) according to Claim 3, characterized in that said first driver arrangements (41) comprise a mass (42) acting on at least one pusher (26, 27) by its own weight.

5. A fixture (1) according to Claim 4, characterized in that said second driver arrangements (57) comprise said mass (42) acting on said former (20) with its own weight.

6. A fixture (1) according to Claim 2, characterized in that it comprises vertical sheet plates (65) associated with the gantry (9) to keep the sheet portions (7) being deformed downwards guided.

7. A fixture (1) according to Claim 2, characterized in that it comprises vertical sheet plates (66) associated with the movable former (20) to keep the sheet portions (8) being deformed upwards guided.

## Patentansprüche

1. Verfahren zur Wärmeverformung von ursprünglich flachem Scheibenglas (2) auf einer Formvorrichtung (18), die unter dem Scheibenglas (2) angebracht wird und Scheibenabschnitte (7) aufnimmt, die durch die Schwerkraft vertikal nach unten verformt werden, das einen Schritt umfaßt, in dem die Scheibe (2) von Drückvorrichtungen (26, 27) gedrückt wird, die horizontal auf einander gegenüberliegende Kanten (3, 4) der Scheibe (2) wirken, **dadurch gekennzeichnet,** daß es einen gleichzeitig ausgeführten Schritt umfaßt, in dem auf andere Scheibenabschnitte (8) eine Schubkraft wirkt, die über eine bewegliche Formvorrichtung (20) von unten nach oben wirkt und sie gegen die Schwerkraft nach oben verformt.

2. Vorrichtung (1) zur Wärmeverformung von Scheibenglas (2) der Art, die in einem Gerüst (9) eine Formvorrichtung (18) umfaßt, die Scheibenabschnitte (7) aufnimmt, die nach unten verformt werden, sowie zwei Drückvorrichtungen (26, 27), die so angeordnet sind, daß sie auf einander gegenüberliegende Kanten (3, 4) der Scheibe (2) wirken und die mittels einer ersten Antriebsanordnung (41) horizontal aufeinander zu bewegt werden können, um Druck auf die Scheibe auszuüben, **dadurch gekennzeichnet,** daß sie wenigstens eine bewegliche Formvorrichtung (20) umfaßt, die durch die Wirkung einer zweiten Antriebsanordnung (57) vertikal bewegt werden kann, um so an Abschnitten (8) der Scheibe (2) anzuliegen und sie nach oben zu verformen.

3. Vorrichtung (1) nach Anspruch 2, **dadurch gekennzeichnet,** daß sie einen Antrieb (33) zwischen den Drückvorrichtungen (26, 27) umfaßt, der sie miteinander verbindet, so daß ihre Bewegungen in bezug auf das Gerüst (9) gleich sind, jedoch entgegengesetzte Richtung haben.

4. Vorrichtung (1) nach Anspruch 3, **dadurch gekennzeichnet,** daß die erste Antriebsanordnung (41) eine Masse (42) umfaßt, die durch ihr eigenes Gewicht auf wenigstens eine Drückvorrichtung (26, 27) wirkt.

5. Vorrichtung (1) nach Anspruch 4, **dadurch gekennzeichnet,** daß die zweite Antriebsanordnung (57) die Masse (42) umfaßt, die durch ihr eigenes Gewicht auf die Formvorrichtung (20) wirkt.

6. Vorrichtung (1) nach Anspruch 2, **dadurch gekennzeichnet,** daß sie vertikale Scheibenplatten (65) umfaßt, die mit dem Gerüst (9) verbunden sind und die Scheibenabschnitte (7), die nach unten verformt werden, führen.

7. Vorrichtung (1) nach Anspruch 2, **dadurch gekennzeichnet,** daß sie vertikale Scheibenplatten (66) umfaßt, die mit der beweglichen Formvorrichtung (20) verbunden sind und die Scheibenabschnitte (8), die nach oben verformt werden, führen.

## Revendications

1. Procédé de déformation thermique d'une feuille de verre (2) plate à l'origine sur une forme (18) placée sous la feuille de verre (2) afin qu'elle supporte des parties (7) de feuille qui subissent une déformation verticale descendante sous l'action des forces de pesanteur, comprenant une étape dans laquelle la feuille (2) est soumise à une compression par des poussoirs (26, 27) agissant horizontalement sur des bords opposés (3, 4) de la feuille (2), caractérisé en ce qu'il comporte une étape simultanée dans laquelle d'autres parties (8) de feuille sont soumises à une force de poussée agissant vers le haut, par-dessous, exercée par une forme mobile (20) destinée à les déformer vers le haut à l'encontre des forces de pesanteur.

2. Organe de montage (1) destiné à la déformation thermique d'une feuille de verre (2), du type qui comprend, dans un portique (9), une forme (18) destinée à supporter des parties de feuille (7) qui sont déformées vers le bas, et deux poussoirs (26, 27) disposés afin qu'ils agissent sur des bords opposés (3, 4) de la feuille (2) et mobiles horizontalement afin qu'ils se rapprochent l'un de l'autre sous l'action de premiers ensembles d'entraînement (41) de manière que la feuille soit soumise à une compression, caractérisé en ce qu'il comprend au moins une forme mobile (20) destinée à être déplacée verticalement sous l'action de seconds ensembles d'entraînement (57) afin qu'elle vienne au contact de parties (8) de la feuille (2) et les déforme par déplacement vers le haut.

3. Organe (1) selon la revendication 2, caractérisé en ce qu'il comprend un dispositif d'entraînement (33) placé entre les poussoirs (26, 27) et les raccordant de manière que leurs déplacements par rapport au portique (9) puisse être rendus égaux mais de sens opposés.

4. Organe (1) selon la revendication 3, caractérisé en ce que les premiers ensembles d'entraînement (41) comportent une masse (42) agissant sur au moins un poussoir (26, 27) sous l'action de son propre poids.

5. Organe (1) selon la revendication 4, caractérisé en ce que les seconds ensembles (57) d'entraînement comportent la masse (42) qui agit sur la forme (20) sous l'action de son propre poids.

6. Organe (1) selon la revendication 2, caractérisé en ce qu'il comprend des plaques verticales (65) en forme de feuille associées au portique (9) de manière que les parties (7) de feuille qui se déforment vers le bas restent guidées.

7. Organe (1) selon la revendication 2, caractérisé en ce qu'il comporte des plaques verticales (66) en forme de feuille associées à la forme mobile (20) afin que les parties (8) de feuille qui se déforment vers le haut restent guidées.
